# EUROPÄISCHE PATENTANMELDUNG

(11) **EP 0 685 355 A1**
(43) Veröffentlichungstag der Anmeldung: **06.12.1995**
(21) Anmeldenummer: 95103921.3
(22) Anmeldetag: 17.03.1995
(51) Int. Cl.: B60J 5/04

(54) **Aufprallträger**

(30) Priorität: 30.05.1994 DE 4418805; 20.07.1994 DE 4425572
(71) Anmelder: SCHADE KG, D-58840 Plettenberg (DE)
(72) Erfinder: Dancasiu, Michael, D-42105 Wuppertal (DE)

(57) **Zusammenfassung**

Es soll ein Aufprallträger für Seitenteile von Fahrzeugen insbesondere für Fahrzeugtüren, so ausgelegt werden, daß das Verhältnis der Biegespannung im mittleren Bereich zu den Stirnendbereichen minimiert wird.

Bei dem erfindungsgemäßen Aufprallträger ist das Widerstandsmoment gegen Biegung im mittleren Bereich höher als in den Stirnendbereichen. Dies wird erreicht, indem der Querschnitt im mittleren Bereich mittels eines Teil der Profilschiene (10) bildenden Verstärkungsteiles und/oder eines an dieser zusätzlich festgelegten Verstärkungselementes (36) versteift wird.

## Beschreibung

Die Erfindung bezieht sich auf einen Aufprallträger für Seitenteile von Fahrzeugen oder dergleichen, z. B. für Automobiltüren.

Aufprallträger dieser Art werden üblicherweise in die Karosserie-Seitenteile oder in Automobiltüren integriert, um die Fahrzeuginsassen bei einem seitlichen Aufprall von außen besser zu schützen. Deshalb müssen die als Profilschienen ausgebildeten Aufprallträger so ausgelegt werden, daß ein größtmögliches Widerstandsmoment gegen Biegung erreicht wird. Bei einem Unfall werden die Aufprallträger bekanntlich deutlich stärker auf Biegung als auf Zug beansprucht. Da die Aufprallträger meist mit den Stirnenden an der Karosserie oder den Türen festgelegt werden, sind sie bei einem Aufprall von außen hinsichtlich der Verteilung von einwirkenden Kräften und Spannungen wie ein Träger auf zwei Stützen zu bewerten. Daraus ergibt sich, daß die Biegespannung im mittleren Bereich auf der Länge des Trägers deutlich großer ist als in den beiden Endbereichen. Als Idealform für den Träger sollte deshalb eine Form angestrebt werden, bei der die Biegespannung über dessen gesamte Länge gleich oder annähernd gleich ist.

Aufprallträger in Form von Profilschienen sind zwar in den verschiedensten Querschnittsformen bekannt, jedoch ist allen bekannten Aufprallträgern gemeinsam, daß sich die Querschnitte der Profilschienen über deren Längen nicht ändern, wenn man von den Formgebungen der Stirnendbereiche absieht, die zur Befestigung der Aufprallträger an den Karosseriewänden dienen.

Der Erfindung liegt die Aufgabe zugrunde, einen Aufprallträger der eingangs beschriebenen Art so auszulegen, daß er zur Erhöhung des Schutzes der Insassen eines Fahrzeuges bei Belastung auf Biegung einer Idealform entspricht, wobei das Verhältnis der Biegespannungen zueinander zumindest im mittleren Bereich des Trägers gegenüber dessen Stirnendbereichen minimal gehalten wird.

Diese Aufgabe wird erfindungsgemäß gelöst, indem der Aufprallträger zumindest aus einer rinnenartig ausgebildeten, einseitig offenen Profilschiene besteht, daß die Profilschiene im mittleren Bereich einen das Widerstandsmoment gegen Biegung erhöhendes Verstärkungsteil bildet, und daß der Verstärkungsteil wahlweise von einer Querschnittsvergrößerung der Profilschiene im mittleren Bereich gegenüber den Stirnendbereichen und/oder von einem zusätzlichen Verstärkungselement gebildet ist.Wie aufgezeigt, ist es nach der Erfindung wesentlich, daß die Profilschiene im mittleren Bereich einen das Widerstandsmoment gegen Biegung erhöhenden Verstärkungsteil bildet. Der Verstärkungsteil kann nach der Erfindung z. B. dadurch gebildet werden, daß er auf dessen Länge und/oder Breite und/oder Höhe von den Enden der Profilschiene zur Mitte hin unterschiedliche Querschnittsabmessungen besitzt. Darunter sind auch unterschiedliche Abmessungen der Wandstärken der Profilschiene und des Verstärkungselementes zu verstehen. Diese Querschnittsabmessungen können im Sinne einer Querschnittsverstärkung zunehmend sein. Sie können entweder an der praktisch einen Hauptträger bildenden Profilschiene allein vorgesehen sein. Es ist aber auch möglich, die Querschnittsverstärkungen durch das Aufsetzen des zusätzlichen Verstärkungselementes auf die Profilschiene zu erreichen. Dabei kann nach einem weiteren Vorschlag der Erfindung die Profilschiene und das Verstärkungselement vorzugsweise aus Werkstoffen mit unterschiedlichen Festigkeitseigenschaften bestehen. Die Wahl unterschiedlicher Werkstoffe kann deshalb sinnvoll sein, weil in der Praxis vielfach die Profilschiene selbst auf Zugspannung belastet wird, während die Verstärkungselemente überwiegend Druckspannungen aufzunehmen haben. Es können aber auch wie bei der Profilschiene, die Länge, Breite oder Höhe auch des Verstärkungselementes verstärkt sein.

Eine andere Möglichkeit, die Widerstandsmomente des Aufprallträgers zu erhöhen, wird nach einem weiteren Vorschlag der Erfindung darin gesehen, daß im Querschnitt gesehen die Breite des unteren Quersteges der Profilschiene von deren Enden zur Mitte hin zunimmt, daß die Höhe der äußeren Abwinkelungen der beiden Seitenschenkel und die Breite der Abwinkelungen jeweils zur Mitte hin abnimmt, und daß auf den so geformten mittleren Bereich der Profilschiene das zusätzliche Verstärkungselement aufgesetzt und dort befestigt wird. Nach diesem Vorschlag wird zwar die Profilschiene selbst zum Teil geschwächt, weil der Verstärkungsteil bereichsweise sehr schmal gehalten wird, doch durch das zusätzliche Verstärkungselement wird diese Schwachstelle nicht nur ausgeglichen, sondern sogar im Sinne einer Querschnittsverstärkung insgesamt ergänzt.

Vorzugsweise ist die Profilschiene im Querschnitt im wesentlichen U-förmig ausgebildet, wobei die äußeren Ränder der Seitenschenkel der Profilschiene zur Bildung von oberen Randstegen ein- oder mehrfach nach außen abgewinkelt sind. Selbstverständlich können die Abwinkelungen auch nach innen abgewinkelt werden je nach der gewünschten Befestigungsart. Zweckmäßig sind die Randstege in etwa rechtwinklig nach außen abgebogen. Statt der Wahl eines U-Profils ist es auch möglich, die Seitenschenkel der offenen Profilschiene - im Querschnitt gesehen - unter einen Winkel (α) zu stellen, der auf der Länge der Profilschiene veränderbar ist.

Eine besondere Versteifungswirkung wird nach einem weiteren Vorschlag der Erfindung dadurch erreicht, daß die Breite des unteren Quersteges der Profilschiene und der Abstand der Seitenschenkel in dessen oberen Bereich von den Endbereichen der Profilschienenlänge zur Mitte hin unabhängig voneinander veränderbar sind.

Nach einem anderen im Rahmen des Erfindungsprinzips für sich allein sehr wesentlichen Vorschlag kann der Abstand zwischen den Seitenschenkeln auf der Länge oder einer Teillänge der Profilschiene wechselweise zu- oder abnehmen. Dabei können diese Verstärkungskonturen zur Querschnittsmitte bzw. zum unteren Quersteg der Profilschiene hin konstant verlaufen oder kontinuierlich auslaufen. Zweckmäßig nimmt die Breite des unteren Quersteges auf der Länge oder Teillänge der Profilschiene zur Mitte hin zu und/oder ab. Auf diese Weise wird eine besonders wirksame Verstärkung der Profilschiene insgesamt erreicht, weil durch die Zu- und Abnahme der Querschnittsabstände zwischen den Seitenschenkeln praktisch eine wellenförmige oder anders verlaufende Materialversteifung erzeugt wird.

Auch ist es von Vorteil, wenn im Bereich des Bodens des Verstärkungsteiles ein oder mehrere Verstärkungsinseln in Form von in das Material des Trägers integrierten oder gesondert aufgesetzten Materialversteifungen vorgesehen sind. Hierdurch kann im Bereich des Verstärkungsteiles eine noch weiter verbesserte Versteifung bzw. eine Vergrößerung des Widerstandsmomentes erzielt werden. Vorteilhaft sind die gesondert aufgesetzten Verstärkungsinseln am Boden des Verstärkungsteiles mechanisch befestigt oder angeschweißt oder angeklebt. Um Material einzusparen, können die Inseln auch mit Ausnehmungen versehen sein.

Ist der Aufprallträger mit einem zusätzlichen Verstärkungselement ausgerüstet - dies kann nach der Erfindung dadurch erfolgen, daß als Verstärkungselement ein schließend in den mittleren Bereich der Profilschiene eingesetzter Ring oder dergleichen vorgesehen ist - so wird dadurch die Stabilität des Aufprallträgers zusätzlich wesentlich erhöht, so daß bei gleicher Krafteinwirkung von außen der Träger einer noch geringeren Verformung ausgesetzt und dadurch der Schutz der Insassen wesentlich erhöht wird. Die Profilschiene kann aus Leichtmetall, z.B. Aluminium gefertigt werden, um das Gewicht gering zu halten, während das Verstärkungselement beispielsweise aus Stahl bestehen kann. Selbstverständlich istes auch möglich, die Profilschiene z. B. aus Stahl und das Verstärkungselement aus Federstahl zu fertigen. Vorteilhaft weist der als Verstärkungselement in die Profilschiene eingesetzte Ring einen winkelfömigen, C-förmigen, U-förmigen, Doppel-T-profilförmigen oder einen Querschnitt in Form eines Hohlprofils, z.B. in Form eines segmentförmigen Abschnittes, oder eines Vollprofiles auf.

Zweckmäßig ist das Verstärkungselement nach Art eines Auflegeteiles ausgebildet und mit die Randstege der Profilschiene zumindest bereichsweise überdeckenden Außenschenkeln versehen, wobei die Randstege und die Außenschenkel durch mechanische Verbindungsmittel und/oder durch Schweißung oder Klebung miteinander verbunden sind. Um die Steifigkeit auch des Auflegeteiles weiter zu erhöhen, ist dieses vorzugsweise mit der Außenkontur folgenden Sicken oder dergleichen versehen. Ideal ist es, wenn nach einem weiteren Vorschlag der Erfindung die Wandungen des Auflegeteiles dem Verstärkungskonturenverlauf des Trägers d. h. der Profilschiene, angepaßt sind.

Die Profilschiene kann im Querschnitt auch C-förmig ausgebildet sein, wobei dann die freien abgewinkelten Ränder den eingesetzten Ring hintergreifen.

Das Auflegeteil kann alternativ auch als Doppel-T-Profilstück ausgebildet sein, wobei die parallelen Flansche ungleich breit sind. Dadurch kann eine Verbindung mit den abgewinkelten Randschenkein der Profilschiene hergestellt werden, wobei der kürzere Flansch in die Profilschiene eingreift. Bei einem Belastungsfall wird ein Kräftefluß erreicht, bei dem die weniger knickstabilen parallelen Schenkel der Profilschiene entlastet werden. Die Kraft wird dann anteilig vom Mittelsteg des T-förmigen Auflegeteils in den Übergangsbereich zwischen dem Grund der U-förmigen Profilschiene und den beiden parallelen Flansche eingeleitet.Es ist aber auch möglich, die Breite dessen paralleler Flansche konstant zu halten. Selbstverständlich ist es auch möglich, zur weiteren Versteifung den unteren Querschnitt der Profilschiene mit Ausbauchungen oder dergleichen Konturenänderungen des Querschnitts der Profilschiene auszustatten.

Weitere Kennzeichen und Merkmale vorteilhafter Ausgestaltungen der Erfindung ergeben sich aus der nachfolgenden Beschreibung bevorzugter Ausführungsbeispiele in Verbindung mit der Zeichnung:

In der Zeichnung zeigen:
- **Fig. 1:**: eine im mittleren Bereich im Querschnitt vergrößerte Profilschiene nach der Erfindung,
- **Fig. 2:**: ein in den mittleren erweiterten Bereich der Profilschiene nach Fig. 1 einsetzbares Verstärkungselement in Form eines Ringes,
- **Fig. 2a:**: eine besondere Befestigungsart des Ringes nach Fig. 2 an einer C-förmigen Profilschiene mit nach innen umgebogenen Rändern,
- **Fig. 3:**: ein in den mittleren Bereich der Profilschiene nach Fig. 1 einsetzbares Verstärkungselement in Form eines Auflegeteiles,
- **Fig. 4:**: eine zweite Ausführungsform der Profilschiene mit einem im Querschnitt T-förmigen Verstärkungselement in Explosivdarstellung,
- **Figuren 4a und 4b:**: eine Ansicht ähnlich Fig. 4, jedoch mit abgewandelten Querschnittsformen des Verstärkungselements,
- **Fig. 5:**: eine Profilschiene mit einem abgewandelten Verstärkungselement in Explosivdarstellung,
- **Figuren 6 - 15:**: verschiedene mögliche Querschnittsformen für die unterschiedlichen Auflegeteile,
- **Fig. 16:**: eine Darstellung ähnlich der von Fig. 5, jedoch mit einer auf dem Boden der Profilschiene in dem Verstärkungsteil zusätzlich angeordneten Versteifungsinsel,
- **Figuren 16a und 16b:**: zwei mögliche Querschnittsformen für die Profilschiene,
- **Figuren 17, 18, 19:**: weitere Ausführungsmöglichkeiten und Querschnittsgestaltungen der Versteifungsinseln,
- **Fig. 20:**: die Profilschiene in einem Teilschnitt mit Verstärkungssicken innerhalb und außerhalb des erweiterten mittleren Verstärkungsteiles,
- **Fig. 21:**: einen Teil der Profilschiene mit rillenartig gestalteten Außenrändern und einer Verstärkungsrille im unteren Quersteg der Profilschiene,
- **Fig. 22:**: eine weitere Ausführungsform eines Aufprallträgers, in einer Schrägansicht
- **Figuren 23 und 24:**: zwei mögliche Verbindungsarten zwischen dem Auflegeteil und der Profilschiene nach Fig. 22 und
- **Fig. 25:**: eine perspektivische Ansicht der Profilschiene mit auf deren Länge wellenförmig gestalteten Seitenschenkeln.

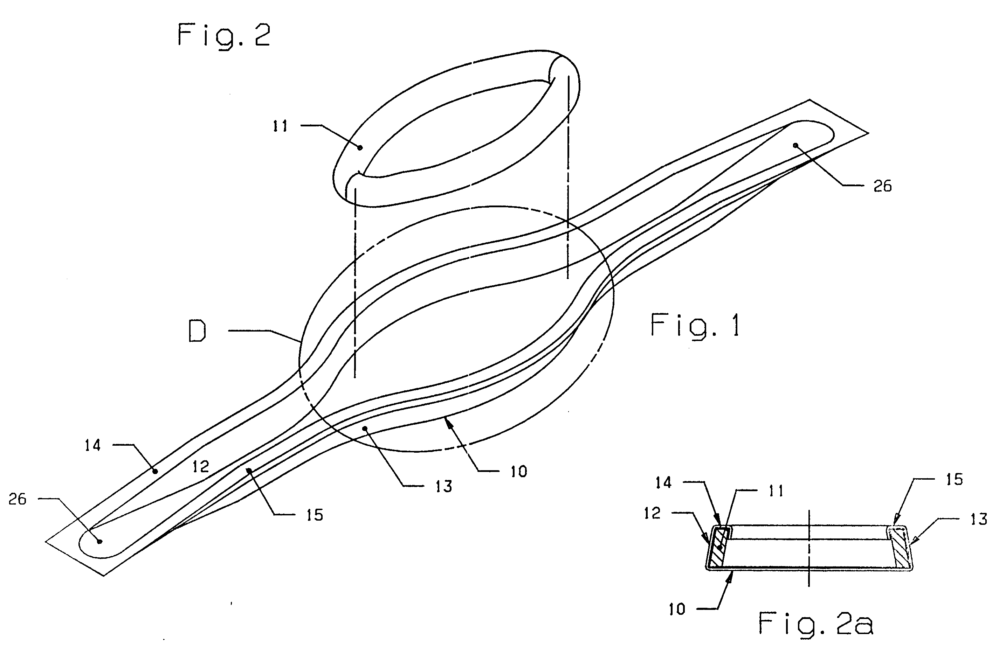

Die Kombination einer Profilschiene 10 nach der Fig. 1 mit einem gesonderten Verstärkungselement in Form eines Ringes 11 nach der Fig. 2 führt zu einer ersten möglichen Ausführungsform des erfindungsgemäßen Aufprallträgers. Die Profilschiene 10 ist im Querschnitt U-förmig ausgebildet, wobei die äußeren freien Ränder der parallelen Schenkel 12, 13 zur Bildung von Randstegen 14, 15 nach außen rechtwinklig abgebogen sind.

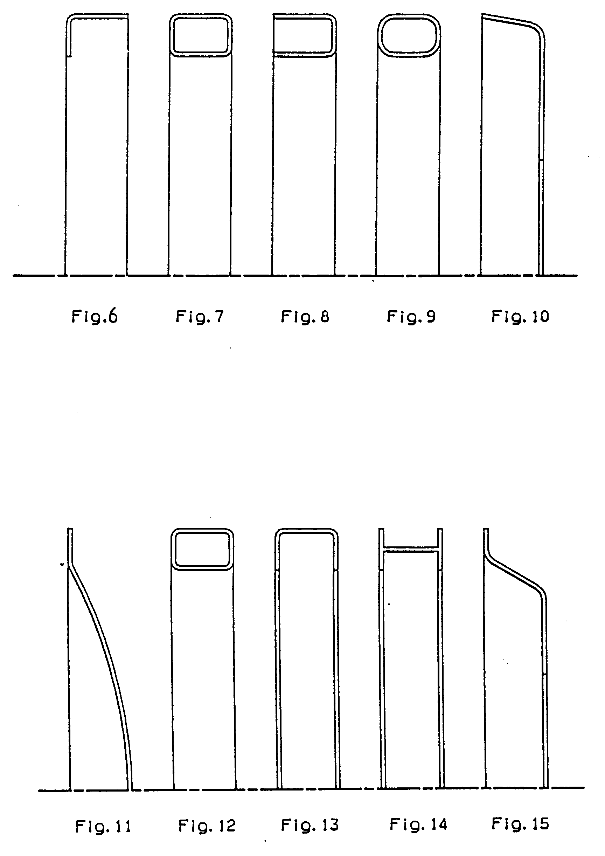

Im dargestellten Ausführungsbeispiel ist die Breite der Profilschiene 10 größer im mittleren Bereich D - im folgenden als Verstärkungsteil bezeichnet - größer als in den Stirnendbereichen 26, d.h. der Abstand der parallelen Schenkel 12, 13 erweitert sich in dem Verstärkungsteil D. Der vergrößerte Querschnittsbereich ist bei diesem Beispiel bogenförmig bzw. konvexartig gestaltet. Der Übergang von den geradlienigen Stirnendbereichen 26 in den bogenförmigen bzw. konvexen Bereich erfolgt kontinuierlich. Der als zusätzliches Verstärkungselement dienende Ring 11 ist so ausgebildet, daß er schließend oder kraftschlüssig in den mittleren Bereich eingesetzt werden kann. Bei der kraftschlüssigen Verbindung werden die Stege 14, 15 z. B. in Form einer Umbördelung elastisch verformt, so daß der Ring 11 durch die Rückstellkräfte gehalten ist. Der Querschnitt des Ringes 11 kann verschiedenartig sein. Nur einige denkbare Möglichkeiten sind in den Figuren 6 - 15 aufgezeigt.

Im Gegensatz zu der in Figur 1 dargestellten Ausführungsform kann die Profilschiene 10 auch im Querschnitt C-förmig gestaltet sein, wobei dann die äußeren Randstege den zugeordneten Rand des Ringes 11 von außen nach innen hintergreifen. Bei einer solchen Ausführung wird der Ring 11 formschlüssig festgelegt. Ein Beispiel für diese Befestigungsart findet sich in der schematischen Darstellung der Fig. 2a wieder.

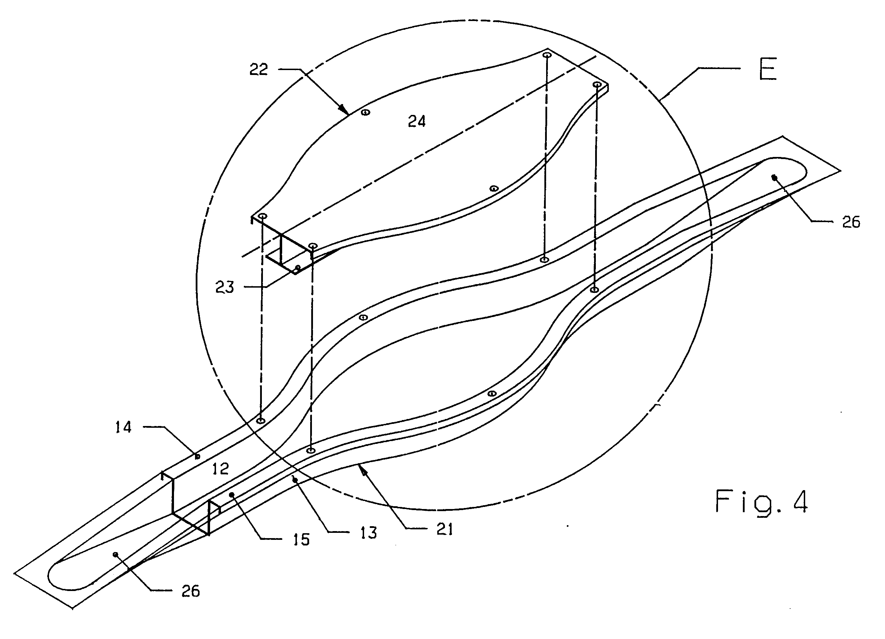

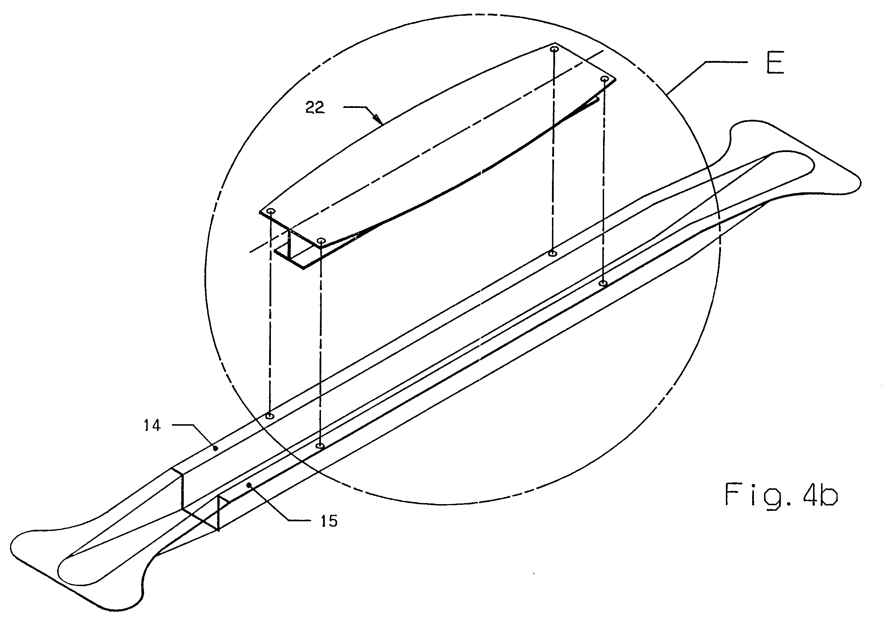

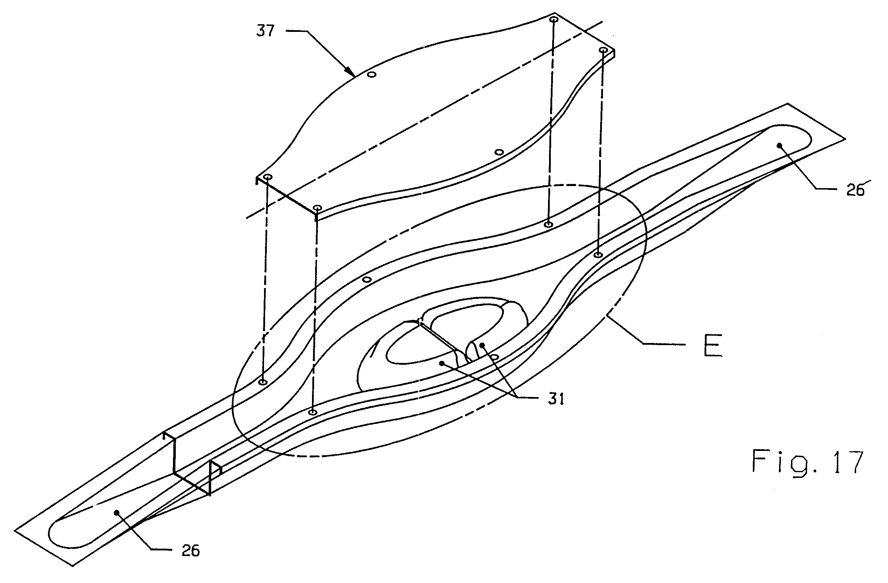

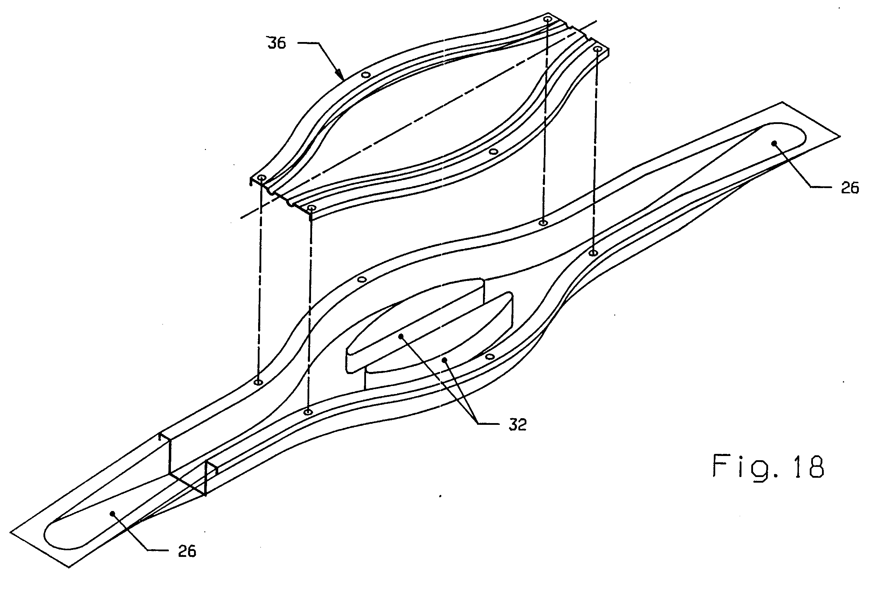

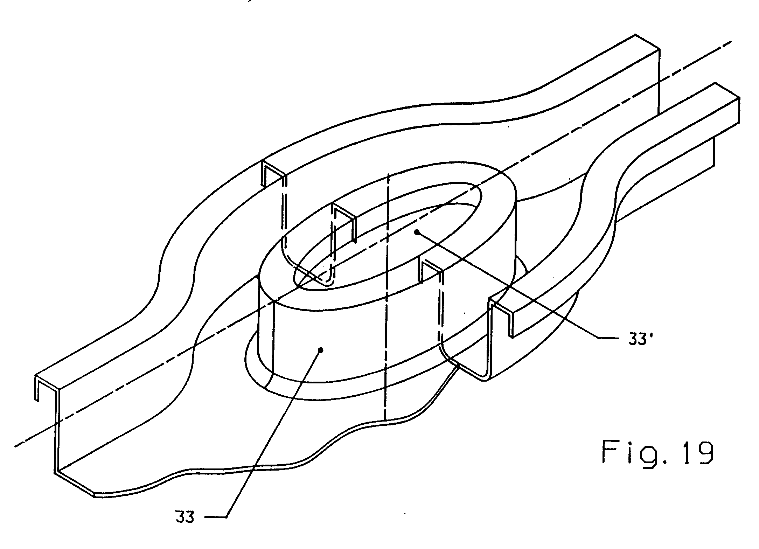

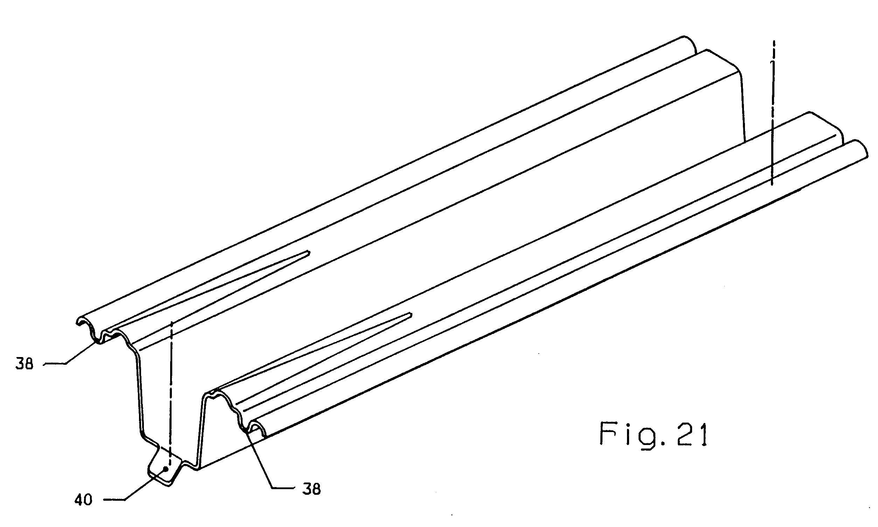

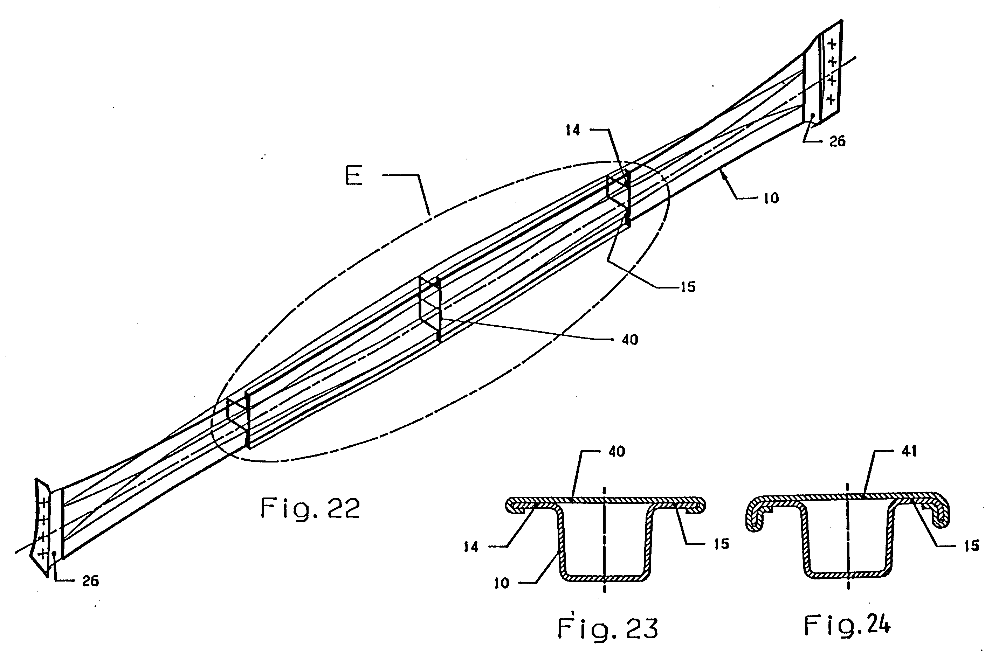

Während bei der in den Figuren 1, 2 dargestellten Ausführungsform der durch die strichpunktierte Begrenzungslinie D umgrenzte mittlere Bereich des Aufprallträgers, d. h. der Verstärkungsteil, dadurch gebildet ist, daß er sowohl eine Querschnittserweiterung als auch kombiniert damit ein zusätzliches Verstärkungselement 11 aufnimmt, ist es selbstverständlich auch möglich, das zusätzliche Verstärkungselement 11 wegzulassen, so daß das den Verstärkungsteil D kennzeichnende erhöhte Widerstandsmoment allein durch die in den Figuren 1, 4, 4a, 5, 16 - 20 und 25 dargestellte Querschnittserweiterung der Profilschiene in deren mittleren Bereich erreicht wird. Die Erfindung sieht aber auch noch eine weitere Variante vor, mit der in dem mittleren Verstärkungsteil D ein erhöhtes Widerstandsmoment erzielt werden kann, und zwar unabhängig davon, ob ein zusätzliches Verstärkungselement vorgesehen ist oder ob die Profilschiene in ihrem mittleren Bereich mit einer Querschnittserweiterung im Sinne einer bogenförmigen Ausbauchung versehen wird. In einem solchen Fall ist es z. B. möglich, den mittleren Verstärkungsteil D der Profilschiene 10, 21 auf dessen Länge und/oder Breite und/oder Höhe mit unterschiedlichen Querschnittsabmessungen oder Wandstärken auszustatten. Diese können erfolgen in Form von Materialverdickungen, der Wände der Wahl geeigneter Werkstoffe oder dergleichen. Nach den vorstehend aufgezeigten Möglichkeiten ist es selbstverständlich auch denkbar, die Profilschiene durchlaufend auch in der Mitte geradlinig verlaufen zu lassen, wie in den Figuren 4b und 21 dargestellt. In der Figur 4b ist der Verstärkungsteil vornehmlich von dem gesonderten Verstärkungselement 22 gebildet. Der mittlere Profilschienenbereich zusammen mit dem Verstärkungselement 22 sind durch die strichpunktierte Grenzlinie E gekennzeichnet. In der Figur 21 sind zur Querschnittsversteifung in den Seitenschenkeln und oberen Abwinkelungen sowie in den unteren Quergurten der Profilschiene Sicken 38 bzw. Querschnitts-Ausbauchungen bzw. -Abstufungen vorgesehen, die durch ein zusätzlich vorgesehenes Verstärkungselement (nicht dargestellt) ergänzt werden können. In den Figuren 22 - 24 besteht der Verstärkungsteil in erster Linie aus einer sich in dem mitteleren Bereich von außen nach innen im Querschnitt vergrößernden Profilschiene 10, die zusätzlich an ihren Seitenabwinkelungen mit einer geradlinig verlaufenden Platte oder Flachschiene 40, 41 verbördelt ist. Hier ist der komplette Verstärkungsteil (Profilschiene und Verstärkungselement) durch die strichpunktierte Grenzlinie E (Fig. 22) gekennzeichnet. Wie ersichtlich, ist somit der Verstärkungsteil insgesamt sowohl von der aufgebördelten Platte bzw. Flachschiene 40, 41 als auch zusätzlich von der im mittleren Bereich vorgesehenen Querschnittserweiterung der Profilschiene gebildet.

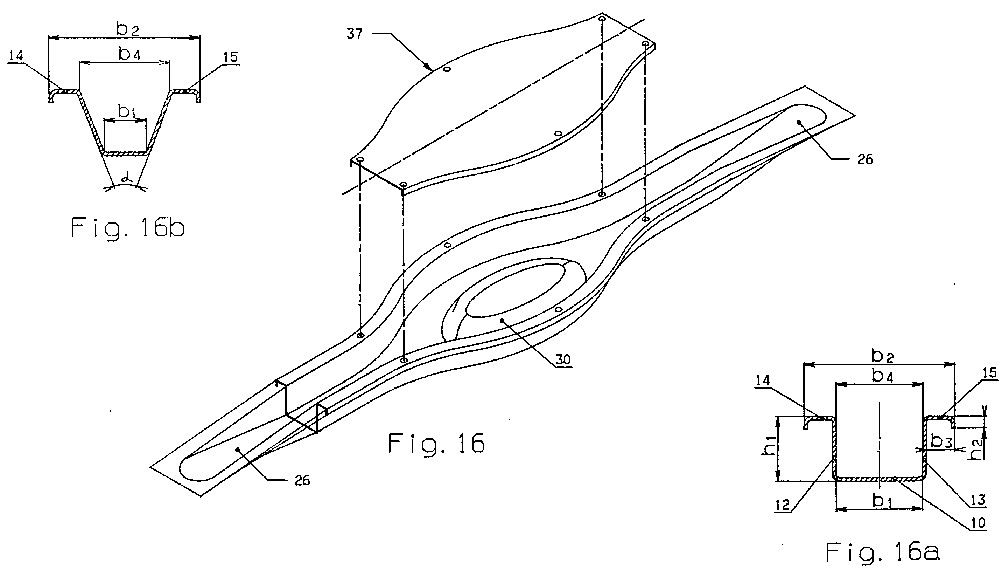

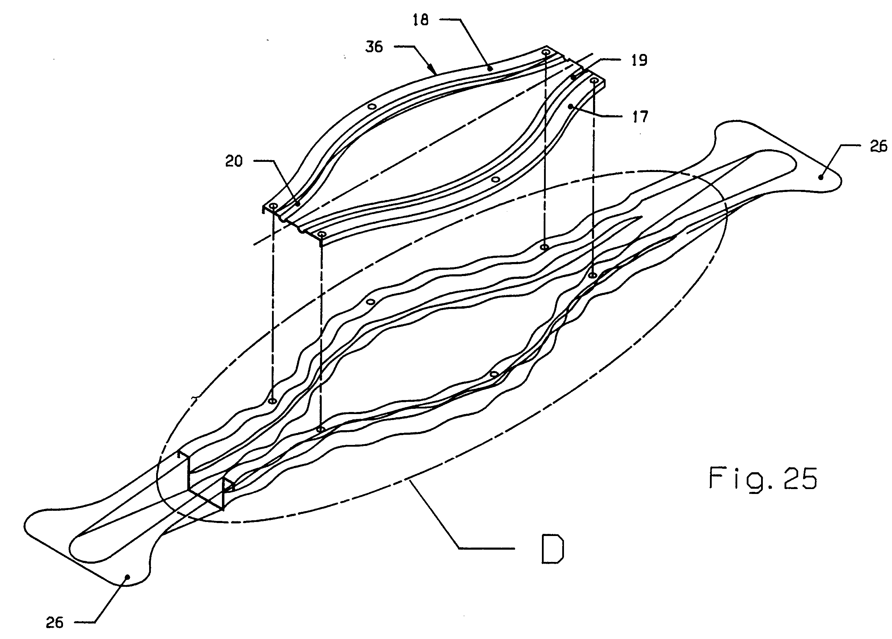

Eine andere nach der Erfindung sehr wesentliche Variante, um das Widerstandsmoment innerhalb des Profils zu erhöhen, zeigt die Fig. 25, aus der ersichtlich ist, daß die Profilschiene selbst auf ihrer Länge einen wellenförmigen Verlauf hat, d. h. der Abstand b₄, wie aus Fig. 16a ersichtlich, zwischen den Seitenschenkeln 12, 13 der Profilschiene kann wechselweise zu- oder abnehmen. Diese wellenförmigen Konturen können auf der gesamten Länge der Profilschiene durchlaufen oder auf die Länge des Verstärkungsteiles D im mittleren Bereich der Profilschiene begrenzt sein. Es kann sinnvoll sein, wenn diese wellenförmigen oder anders gestalteten Verstärkungsrippen von den oberen Seitenkanten der Seitenflansche 12, 13 nach unten hin, d. h. bis zum Boden der Profilschiene hin abnehmen.

Darüber hinaus kann eine andere Verstärkungsart darin bestehen, den die Schenkel 14, 15 verbindenden unteren Quersteg der Profilschiene zu wölben, z. B. indem dieser Steg zumindest innerhalb des mittleren Verstärkungsteiles nach innen gezogen wird. Solche Wölbungen sind vornehmlich im Bereich des mittleren erweiterten Teiles der Profilschiene 10 vorgesehen, so daß, wie aus den Figuren 16 - 19 ersichtlich, inselartige Versteifungszonen entstehen. Um Material einzusparen, können diese Inseln 30, 31, 32, 33 mit Ausnehmungen oder Aussparungen 33' versehen sowie mehrteilig ausgebildet sein.

Bei der C-förmigen Profilschiene gemäß Fig. 2a können die Schenkel 12, 13 im Querschnitt auch schräg zueinander stehen und zwar vorzugsweise so, daß sich der Abstand zu den freien Rändern verkleinert. Durch den in die Profilschiene 10 eingesetzten Ring 11 werden auch die die Seitenwände der Profilschiene 10 bildenden Schenkel 12, 13 stabilisiert, da der Ring 11 so wirkt als sei die Wanddicke verstärkt worden. Zweckmäßig liegt der Ring mit einer zugeordneten Stirnfläche bündig an bzw. fluchtet mit den Randstegen 14, 15. Der Ring kann je nach dem Querschnitt der Profilschiene 10 zylindrisch oder kegelstumpfförmig sein.

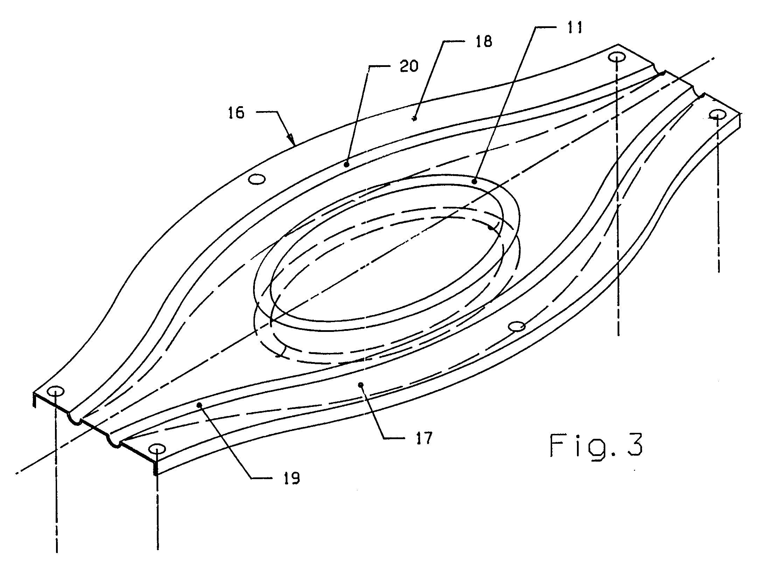

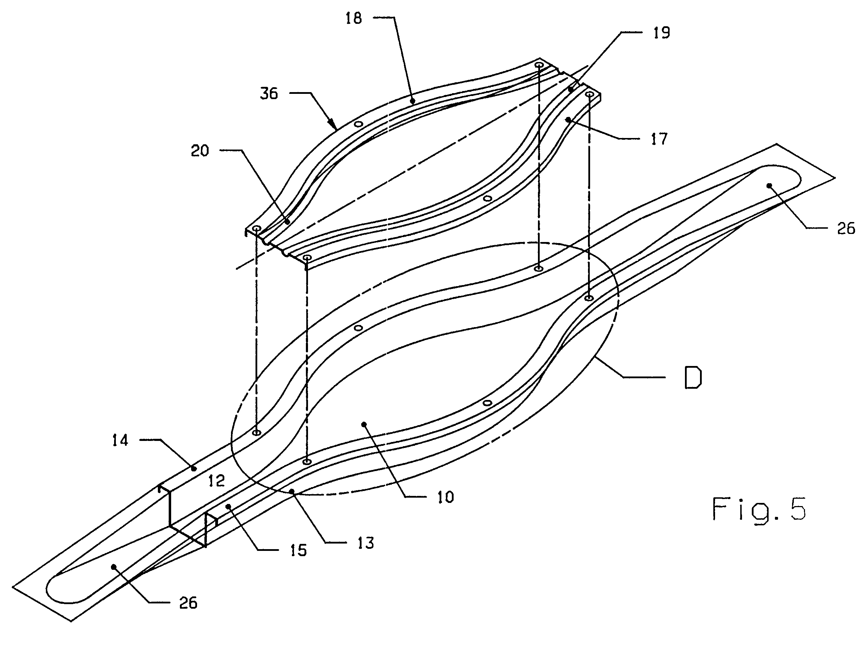

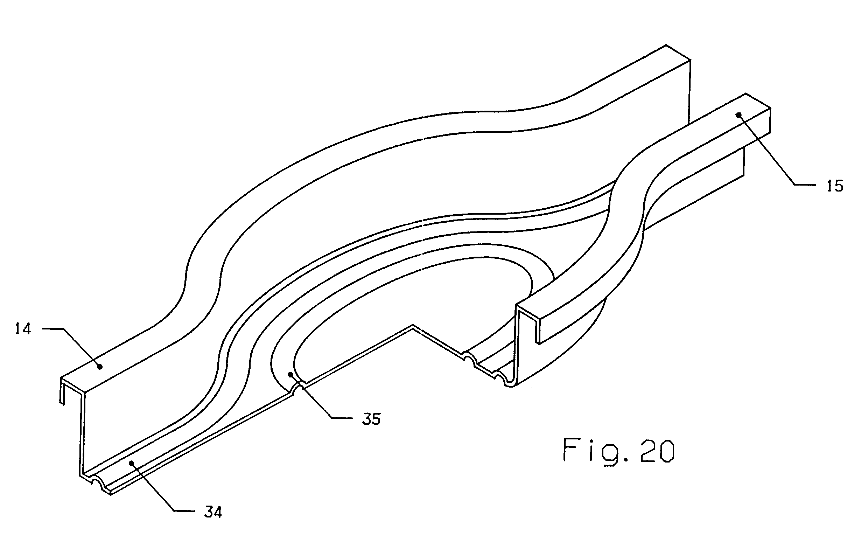

In den Fig. 3 und 5 sind als Verstärkungselemente jeweils ein Auflegegeteil 16 bzw. 36 dargestellt, die für die Profilschienenform nach der Fig. 1 ausgelegt sind. Die äußere Kontur der Einlegeteile 16, 36 entspricht dem konvex gekrümmten Mittelbereich der Profilschiene 10, so daß sie ebenfalls schließend oder kraftschlüssig in die Profilschiene 10 eingesetzt werden können. Die Auflegeteile 16, 36 sind mit Außenschenkeln 17, 18 versehen, die die Randstege 14, 15 der Profilschiene 10 im zugeordneten Bereich übergreifen. Die Außenschenkel können mit den Randstegen 14, 15 durch mechanische Verbindungsmittel, z. B. Schrauben, Niete oder dergleichen, oder aber auch durch Klebung, Schweißung oder andere bekannte Techniken verbunden sein. Zur zusätzlichen Erhöhung der Stabilität kann das jeweilige Einlegeteil 16, 36, das in den Beispielen nach den Figuren 3, 4, 4a, 4b, 5, 16, 17, 18, 22 - 24 und 25 auch als Auflegeteil bezeichnet werden kann, mit Sicken 19, 20 versehen sein, die der Außenkontur folgen. Entsprechende Sicken können auch im Bodenbereich der Profilschiene vorgesehen sein, wie aus der Fig. 20 erkennbar ist. Dort sind die Sicken durch die Bezugsziffern 34, 35 gekennzeichnet. Die Sicken 35 können ring- oder ovalförmige Rillen sein. Die Rillen 34 können auf der Länge der Profilschiene 10 durchlaufen oder auch nur eine Teillänge der Profilschiene erfassen. Statt oder zusätzlich zu den Sicken 34, 35 kann der Bodenbereich der Profilschiene auch mit weiteren Materialabstufungen 40 (Fig. 21) versehen werden, die ebenfalls zur Erhöhung des Widerstandsmomentes in dem Verstärkungsteil, aber auch wenn gewünscht, auf der übrigen Profillänge beitragen.

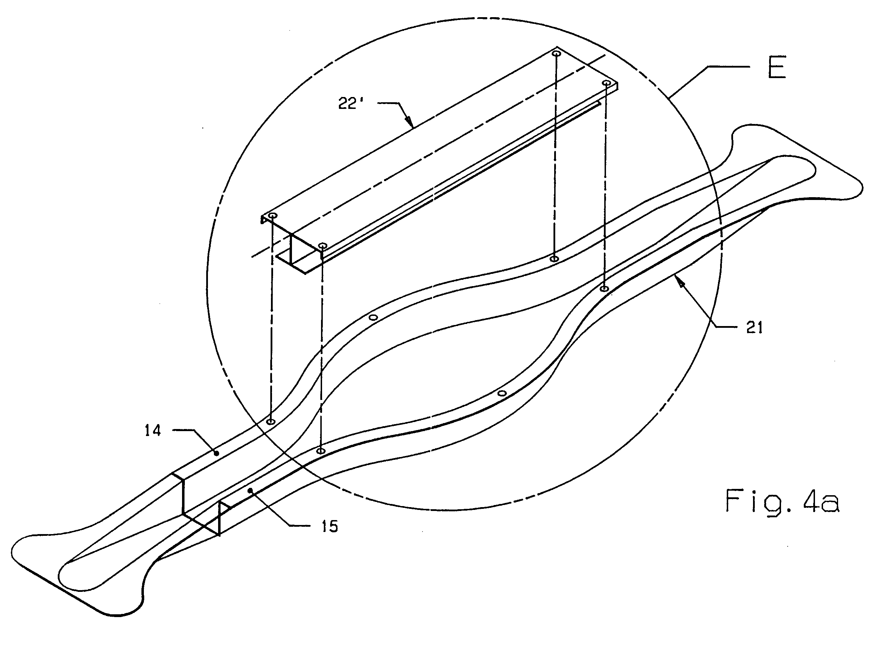

Bei der Ausführung nach Fig. 4 wird der Aufprallträger durch eine stranggepreßte oder gewalzte Profilschiene 21 und ein Verstärkungselement in Form eines Doppel-T-Profilstückes 22 gebildet. Die Breiten der parallelen Schenkel sind ungleich, so daß der schmalere Flansch 23 in die Profilschiene 21 eingreift und die äußeren Ränder des breiteren Flansches 24 die Randstege 14, 15 übergreifen. Sie werden in der zuvor beschriebenen Weise miteinander verbunden. Es ergibt sich, daß die die Seitenwände bildenden parallelen Schenkel 12, 13 entlastet werden, weil der Kraftfluß im Belastungsfall vom breiteren Schenkel 24 des Doppel-T-Profilstückes über den Mittelsteg auf den schmaleren Schenkel 23 übergeht und von dort auf den Untergurt der Profilschiene 21 übertragen wird. Das Ausführungsbeispiel nach Fig. 4a unterscheidet sich von der Ausführung nach der Fig. 4 dadurch, daß der obere Steg des Doppel-T-Profils 22' geradlinig verläuft, d. h. in seiner Außenkontur nicht unbedingt der Außenkontur der Schenkel 14, 15 der Profilschiene 21 folgen muß. Bei der dritten Variante nach der Fig. 4b ist, wie ersichtlich, das besonders geformte Verstärkungselement 22 ähnlich dem aus Fig. 4, auf eine geradlinig verlaufende, im Querschnitt U-förmig gestaltetet Profilform aufgesetzt, während bei den Beispielen nach der Fig. 4 und 4a in dem mittleren Verstärkungsbereich die Profilschienen jeweils in ihren mittleren Querschnittsbereichen erweitert sind. Der Verstärkungsteil als Ganzes (Profilschiene 21 und Verstärkungsteil 22') ist bei dieser Darstellung durch die strichpunktierte Grenzlinie E gekennzeichnet. Alle bisher dargestellten und beschriebenen Ausführungsformen zeigen, daß es unabhängig von den angegebenen exakten Konturenverläufen der Profilschienen und/oder der Verstärkungselemente innerhalb des mittleren Verstärkungsbereiches in erster Linie darauf ankommt, im Verstärkungsbereich auf einer bestimmten Länge einen Verstärkungsteil D (nur in Profilschiene) oder E (Profilschiene und Verstärkungselement) zu bilden, der so gestaltet ist, daß er gegenüber der Grundform der Profilschiene zumindest im mittleren Bereich ein erhöhtes Widerstandsmoment gegen Biegung erzeugt.

Bei allen Ausführungen der Zeichnung sind die Enden 26 der Profilschiene 10, 21 abgeflacht, um sie an einer Automobiltür sicher festlegen zu können. Entsprechende Darstellungen ergeben sich aus den Figuren 5 und 16 - 18. Wird der Aufprallträger zu anderen als den hier angegebenen Zwecken eingesetzt, dann sind selbstverständlich die Enden 26 entsprechend anzupassen.

In den Figuren 6 - 15 sind verschiedene Querschnittsformen des Verstärkungselementes in Form des Ringes 11 gemäß der Figur 2 dargestellt. Der Querschnitt nach den Figuren 6, 10 ist winkelförmig, der nach den Figuren 7, 9, 12 nach Art eines Hohlprofiles ausgebildet, während der Querschnitt nach den Figuren 11, 15 schalenförmig bzw. in Form eines sphärischen Kugelabschnittes gestaltet ist. Der Querschnitt nach der Figur 14 ist Doppel-T-förmig gestaltet, der nach Fig. 8 als U-Profil und der nach Fig. 13 als Kastenprofil. Selbstverständlich sind noch andere Querschnittsformen für ein Verstärkungselement nach der Erfindung denkbar.

Die in den Zeichnungen dargestellten Profilschienen 10, 21 sind bei den gezeigten Beispielen immer an einer Seite offen. Aus den Figuren ergibt sich, daß bei allen dargestellten Ausführungen zumindest das Widerstandsmoment gegen Biegung im mittleren Bereich wesentlich höher ist als in den Stirnendbereichen. Im Belastungsfall ist das Verhältnis zwischen den unterschiedlichen Spannungen auf der Länge des Aufprallträgers wesentlich geringer als bei Aufprallträgern, die über die gesamte Länge querschnittsgleich ausgestaltet sind, ohne daß zusätzliche Vorkehrungen getroffen werden, wie es die Erfindung vorschlägt.

In der Figur 16 a ist ein Profilquerschnitt dargestellt, der weitgehend bemaßt ist. Dabei sind die Maße b₁ zu b₄ veränderbar, ebenso wie die Höhenmaße der Schenkel bzw. Abwinkelungen h₁, h₂. Ist das Maß b₁ gegenüber b₄ kleiner, so ergibt sich zwangsläufig eine etwa V-förmige Profil-Querschnittsform, wie in der Fig. 16b dargestellt. Ist das Maß b₁ gegenüber b₄ größer, ergibt sich eine etwa C-förmige Querschnittsgestalt, wie aus der Fig. 2a ersichtlich. Die Bemaßungen b₂ bilden die Gesamtbreite des Querschnitts unter Einbeziehung der Abwinkelungen 14, 15; das Maß b₃ kennzeichnet die Breite einer Abwinkelung 14, 15. Obwohl in der Zeichnung nicht dargestellt, ist es sinnvoll, die Ecken der Querschnitte stets abzurunden.

## Patentansprüche

1. Aufprallträger für Seitenteile von Fahrzeugen oder dergleichen, z. B. Automobiltüren, dadurch gekennzeichnet, daß der Aufprallträger zumindest aus einer rinnenartig ausgebildeten, einseitig offenen Profilschiene besteht, daß die Profilschiene (10, 21) im mittleren Bereich gegenüber den Stirnendbereichen einen das Widerstandsmoment gegen Biegung erhöhendes Verstärkungsteil bildet, und daß der Verstärkungsteil wahlweise von einer Querschnittsvergrößerung der Profilschiene im mittleren Bereich und/oder von einem zusätzlichen Verstärkungselement (11, 16, 22, 22', 24, 36, 37, 40) gebildet ist.

2. Aufprallträger nach Anspruch 1, dadurch gekennzeichnet, daß der mittlere Verstärkungsteil der Profilschiene (10, 21) auf dessen Länge und/oder Breite und/oder Höhe unterschiedliche Querschnittsabmessungen aufweist.

3. Aufprallträger nach Anspruch 1 oder 2, dadurch gekennzeichnet, daß das zusätzliche Verstärkungselement (11, 16, 22, 22', 24, 36, 37, 40) auf seiner Länge und/oder Breite und/oder Höhe querschnittsverstärkt ist.

4. Aufprallträger nach einem der Ansprüche 1 - 3, dadurch gekennzeichnet, daß die Profilschiene (10,21) und das Verstärkungselement (11, 16, 22, 22' 24, 36, 37, 40 ) aus Werkstoffen mit unterschiedlichen Festigkeitseigenschaften besteht.

5. Aufprallträger nach einem oder mehreren der Ansprüche 1 - 4, dadurch gekennzeichnet, daß die Profilschiene (10, 21) im Querschnitt im wesentlichen U-förmig ausgebildet ist, und daß die äußeren Ränder der Seitenschenkel (12, 13) der Profilschiene zur Bildung von oberen Randstegen (14, 15) ein- oder mehrfach nach außen abgewinkelt sind.

6. Aufprallträger nach einem oder mehreren der Ansprüche 1 - 5, dadurch gekennzeichnet, daß im Querschnitt gesehen die Breite (b₁) (Fig. 16a) des unteren Quersteges der Profilschiene (10, 21) von deren Enden zur Mitte hin zunimmt, daß die Höhe (h₂) der äußeren Abwinkelungen (14, 15) der beiden Seitenschenkel (12, 13) und die Breite (b₃) der Abwinkelungen (14, 15) jeweils zur Mitte hin abnimmt, und daß auf den so geformten mittleren Bereich der Profilschiene (10, 21) das zusätzliche Verstärkungselement aufgesetzt und befestigt wird.

7. Aufprallträger nach Anspruch 5 oder 6, dadurch gekennzeichnet, daß die Randstege (14, 15) in etwa rechtwinkelig nach außen abgebogen sind.

8. Aufprallträger nach einem oder mehreren der Ansprüche 1 - 7, dadurch gekennzeichnet, daß die Schenkel (12, 13) - im Querschnitt gesehen - unter einem Winkel (α) stehen, der auf der Länge der Profilschiene (10, 21) veränderbar ist (Fig. 16b).

9. Aufprallträger nach einem oder mehreren der Ansprüche 1 - 8, dadurch gekennzeichnet, daß die Breite (b₁) des unteren Quersteges der Profilschiene (10, 21) und der Abstand (b₄) der Seitenschenkel (12, 13) in deren oberen Bereich von den Endbereichen der Profil schienenlänge zur Mitte hin unabhängig voneinander veränderbar sind.

10. Aufprallträger nach einem oder mehreren der Ansprüche 1 - 9, dadurch gekennzeichnet, daß der Abstand (b₄) zwischen den Seitenschenkeln (12, 13) auf der Länge oder einer Teillänge der Profilschiene wechselweise zu- oder abnimmt und/oder zur Querschnittsmitte bzw. zum unteren Quersteg der Profilschiene hin konstant verläuft.

11. Aufprallträger nach Anspruch 9 oder 10, dadurch gekennzeichnet, daß die Breite (b₁₎ des unteren Quersteges auf der Länge oder Teillänge der Profilschiene zur Mitte hin zu- und/oder abnimmt.

12. Aufprallträger nach einem oder mehreren der Ansprüche 1 - 11, dadurch gekennzeichnet, daß im Bereich des Bodens des Verstärkungsteiles eine oder mehrere Verstärkungsinseln (30, 31, 32, 33, 35) in Form von in das Material der Profilschiene integrierten oder gesondert aufgesetzten Materialversteifungen vorgesehen sind.

13. Aufprallträger nach Anspruch 12, dadurch gekennzeichnet, daß die gesondert aufgesetzten Verstärkungsinseln am Boden des Verstärkungsteiles mechanisch befestigt, angeschweißt oder angeklebt sind.

14. Aufprallträger nach den Ansprüchen 12 oder 13, dadurch gekennzeichnet, daß die Verstärkungsinseln mit Ausnehmungen (33') versehen sind.

15. Aufprallträger nach einem oder mehreren der Ansprüche 1 - 14, dadurch gekennzeichnet, daß das Verstärkungselement ein schließend in den mittleren Bereich der Profilschiene (10) eingesetzter Ring (11) ist.

16. Aufprallträger nach Anspruch 15, dadurch gekennzeichnet, daß der Ring einen winkelförmigen, C-förmigen, U-förmigen, Doppel-T-profilförmigen oder einen Querschnitt in Form eines Hohlprofils oder Vollprofils aufweist.

17. Aufprallträger nach einem oder mehreren der Ansprüche 1 bis 16, dadurch gekennzeichnet, daß das Verstärkungselement nach Art eines Auflegeteiles (16, 22, 36, 37, 40) ausgebildet und mit die Randstege (14, 15) der Profilschiene (10) zumindest bereichsweise überdeckenden Außenschenkeln (17, 18) versehen ist, wobei die Randstege und die Außenschenkel durch mechanische Verbindungsmittel und/oder durch Schweißung oder Klebung miteinander verbunden sind.

18. Aufprallträger nach Anspruch 17, dadurch gekennzeichnet, daß das Auflegeteil (16) mit vorzugsweise der Außenkontur folgenden Sicken (19, 20) versehen ist.

19. Aufprallträger nach einem oder mehreren der Ansprüche 15 - 18, dadurch gekennzeichnet, daß die Wandungen des das zusätzliche Verstärkungselement bildenden Auflegeteiles an den Verstärkungskonturenverlauf der Profilschiene angepaßt sind.

20. Aufprallträger nach einem der Ansprüche 1 - 19, dadurch gekennzeichnet, daß die Profilschiene (10) im Querschnitt C-förmig ausgebildet ist, und daß die freien abgewinkelten Ränder den eingesetzten Ring (11) hintergreifen.

21. Aufprallträger nach einem oder mehreren der Ansprüche 1 - 20, dadurch gekennzeichnet, daß das Verstärkungselement als Doppel-T-Profilstück (22, 22') ausgebildet ist, wobei die Breite dessen paralleler Flansche ungleich ist.

22. Aufprallträger nach einem oder mehreren der Ansprüche 1 - 20, dadurch gekennzeichnet, daß das Verstärkungselement als Doppel-T-Profilstück (22, 22') ausgebildet ist, wobei die Breite dessen paralleler Flansche konstant ist.

23. Aufprallträger nach einem oder mehreren der Ansprüche 1 - 22, dadurch gekennzeichnet, daß der untere Quersteg der Profilschiene (10, 21) auf deren Länge oder Teillänge eine oder mehrere Ausbauchungen oder dergleichen besitzt.
